# EUROPÄISCHE PATENTSCHRIFT

(11) **EP 1 504 930 B1**
(45) Veröffentlichungstag und Bekanntmachung des Hinweises auf die Patenterteilung: **07.05.2008**
(21) Anmeldenummer: 04016397.4
(22) Anmeldetag: 13.07.2004
(51) Int. Cl.: B60G 17/04, B60G 17/056, B60G 15/12, B60G 11/26, F16F 9/06, F16F 9/34, F16F 9/342

(54) **Hydrop-Element**
Hydropneumatic-element
Element hydropneumatique

(30) Priorität: 08.08.2003 DE 10336754; 26.11.2003 DE 10355184
(43) Veröffentlichungstag der Anmeldung: 09.02.2005
(73) Patentinhaber: Rheinmetall Landsysteme GmbH, 24107 Kiel (DE)
(72) Erfinder: Kühl, Manfred, 24229 Schwedeneck (DE); Bruhn, Peter, 24536 Neumünster (DE)
(74) Vertreter: Dietrich, Barbara

(56) Entgegenhaltungen:
- DE-A- 2 609 247
- DE-A- 3 111 410
- DE-A- 4 101 221
- US-A- 2 621 924

## Beschreibung

Die Erfindung betrifft ein hydropneumatisches Feder-Dämpfer-Element, ein sog. Hydrop-Element, und den Einsatz an einem ein hohes Leistungsgewicht aufweisendes militärisches Kettenfahrzeug. Ein gattungsgemäßes Hydrop-Element ist aus der DE 2 609 247 A bekannt.

Zu den bekannten Federungs- und Dämpfungselementen eines Kettenfahrzeugs bzw. eines Gleiskettenfahrzeugs gehören Elemente, bei denen die Federung durch einen vorgespannten Gasspeicher erfolgt. Die Übertragung der Aufstandskraft von der Laufrolle erfolgt über einen Tragarm und Kurbelgetriebe auf einen Hauptkolben. Durch den Hauptkolben wird die Kraft auf eine Druckflüssigkeit, z.B. Öl, übertragen. Der Ölraum ist durch einen Trennkolben vom Gasraum getrennt, um eine Vermischung von Öl und Gas zu verhindern. Beim Einfedern oder Ausfedern der Laufrolle muss die Druckflüssigkeit durch ein Dämpfungselement fließen. Durch die in dem Dämpfungselement eingebaute Blende und Ventilkomponenten wird in Abhängigkeit von der Einfederungsgeschwindigkeit der Ölstrom zwischen dem Ölraum auf der Hauptkolbenseite und dem Ölraum auf der Trennkolbenseite gedrosselt. Durch die Drosselung des Ölstroms erfolgt eine Dämpfung der Federbewegung. Durch die Dämpfung der Federbewegung wird das ungewollte Aufschaukeln des Kettenfahrzeuges beim Überfahren von unebenen Fahrbahnen verhindert.
Das Drosseln des Ölstroms hat aber den unerwünschten Effekt, dass dabei das Öl erwärmt wird. Speziell bei gepanzerten Kettenfahrzeugen mit einem hohen Leistungsgewicht ist die durch das Drosseln zugeführte Wärme höher als die von der Oberfläche des Federungselementes abgeführte Wärme. Als Folge davon kann es zu unzulässig hohe Temperaturen für die Dichtelemente und die Druckflüssigkeiten kommen.

Gelöst wird diese Aufgabe durch die Merkmale des Patentanspruchs 1.

Der Erfindung liegt die Idee zugrunde, ausgehend davon , dass ein erstes Mittel, beispielsweise eine Düsennadel ferderwegabhängig in eine feststehende Düsenbohrung einfährt, wobei die Düsennadel stirnseitig am Hauptkolben in Achsmitte angeordnet ist, es insbesondere bei schnellen Ausfederungsbewegungen vorteilhaft ist, diese, kurz bevor ein Endanschlag den Federweg begrenzt, wieder zu bedämpfen, wodurch die Kräfte am Endanschlag reduziert werden können. Dazu ist stirnseitig am Trennkolben in Achsmitte ein weiteres Mittel angeordnet, welches direkt oder indirekt von der Trennkolbenseite her in die Düsenbohrung eingreift.

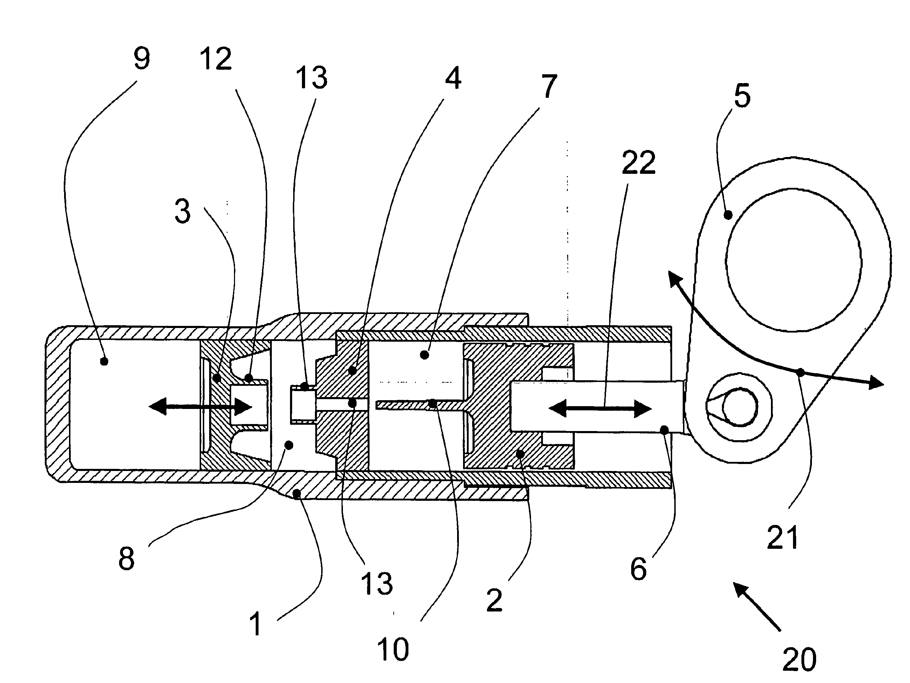

Ein Ausführungsbeispiel der Erfindung ist in der Zeichnung schematisch dargestellt und wird im folgenden näher beschrieben.

Es zeigt die einzige Figur schematisch dargestellt das Prinzip der Erfindung, wobei nur die erfindungswesentlichen Teile eines hydropneumatischen Federpakets bzw. Feder-Dämpfungselements 20 dargestellt sind.

Das Feder- Dämpfungselement 20 weist bekanntermaßen einen Hydraulikzylinder 1, einen Hauptkolben 2, einen Trennkolben 3 sowie ein zwischen dem Hauptkolben 2 und dem Trennkolben 3 befindliches Dämpfungselement (Dämpfungsventil) 4 auf. Mit 5 ist eine Kurbel gekennzeichnet, die mit einem hier in bekannter Art und Weise über einen nicht näher dargestellten Schwingarmzapfen Laufrad eines Fahrzeuges funktional zusammenwirkt. Mit der Kurbel 5 ist ein Pleuel 6 verbunden, das den Hauptkolben 2 des Feder- Dämpfungselements 20 bewegt. Zwischen dem Hauptkolben 2 und dem Dämpfungselement 4 sowie dem Dämpfungselement 4 und dem Trennkolben 3 ist Hydrauliköl 7, 8 eingebunden. Stickstoff bzw. Gas befindet sich zwischen dem Trennkolben 3 und dem Gehäuse des Hydraulikzylinders 5 eingebundenen Gasraum 9.
Stirnseitig am Hauptkolben 2 in Achsmitte angeordnet, beispielsweise angeformt, ist ein Mittel 10, beispielsweise eine Düsennadel, die in eine vergrößerte Düsenbohrung 11 des Dämpfungselements 4 eingreift.
Durch die deutliche Vergrößerung der mittig im Dämpfungselement 4 angeordneten Düsenbohrung 11 kann der Ölstrom ungedrosselt durch diese fließen. Bei größeren Federwegen fährt die in Achsmitte des Hauptkolbens 2 befindliche Düsennadel 10 in die Düsenbohrung 11 ein und reduziert den freien Querschnitt in der Düsenbohrung 11.

Stirnseitig am Trennkolben 3 in Achsmitte angeordnet, z.B. angeformt, ist ein weiteres Mittel 12, beispielsweise eine Hülse. Die im Dämpfungselement 4 angeordnete Düsenbohrung 11 ist in Richtung Trennkolben 3 als Rohr 13 ausgeführt. Der Außendurchmesser des Rohres 13 ist dabei kleiner als der Innendurchmesser der Hülse 12. Die verbleibende Ringfläche wirkt wie der Querschnitt einer Düsenbohrung. Beim Ausfedern fährt die Hülse 12 über das Rohr 13 und reduziert den freien Querschnitt der Düse. Bei schnellen Federbewegungen wird dadurch das Öl wieder durch das Dämpfungselement 4 angedrosselt.
Durch die Kombination von Düsennadel 10 und Hülse 12 wird erreicht, dass bei der Montage oder bei ungewolltem Ölaustritt die Düsennadel 10 und die Hülse 12 nicht kollidieren können.
Wenn genügend Baulänge vorhanden ist, kann alternativ anstelle der Hülse 12 auch eine Düsennadel vorgesehen werden, die dann vorzugsweise direkt in die Düsenbohrung 11 von der Trennkolbenseite her eingreift.

Verwendung findet die Lösung in einem nicht näher dargestellten, da bekannten Fahrzeugen mit einem Laufwerk und Laufrollen in Fahrtrichtung links und rechts an einem Fahrgestell des Fahrzeugs, sowie einem Laufwerksträger, welcher links und rechts am Fahrgestell zwischen Gehäuse und Laufwerk befestigt ist. Dadurch kann neben einem unerwünschten Aufschaukeln des Fahrzeuges beim Überfahren von beispielsweise unebener Fahrbahn auch die Entwicklung von hohen Temperaturen für die Dichtelemente und die Druckflüssigkeiten verhindert werden.

## Patentansprüche

1. Hydrop- Element, bestehend aus einem Hydrop-Federelement mit einem Feder- und Dämpfungselement (20), aufweisend zumindest einen Hydraulikzylinder (1), einen Hauptkolben (2), einen Trennkolben (3) sowie ein Dämpfungselement (4), welches zwischen dem Hauptkolben (2) und dem Trennkolben (3) plaziert ist, **dadurch gekennzeichnet, dass** am Hauptkolben (2) stirnseitig zum Dämpfungselement (4) weisend ein erstes Mittel (10) angebracht ist, welches in eine vergrößerte Düsenbohrung (11) des Dämpfungselements (4) eingreift und stirnseitig am Trennkolben (3) in Achsmitte ein zweites Mittel (12) angeordnet ist, welches direkt oder indirekt von der Trennkolbenseite her in die Düsenbohrung (11) eingreift.

2. Hydrop-Element nach Anspruch 1, **dadurch gekennzeichnet, dass** das erste Mittel (10) eine Düsennadel ist.

3. Hydrop-Element nach Anspruch 1 oder 2, **dadurch gekennzeichnet, dass** das erste Mittel (10) ferderwegabhängig in die feststehende Düsenbohrung (11) einfährt.

4. Hydrop-Element nach Anspruch 1, **dadurch gekennzeichnet, dass** zusätzlich zu einer von der Einfederungsgeschwindigkeit abhängigen Dämpfung eine vom Einfederungsweg abhängige Dämpfungsreduzierung oder Dämpfungsbeeinflussung integriert ist.

5. Hydrop-Element nach Anspruch 1, **dadurch gekennzeichnet, dass** das zweite Mittel (12) eine Hülse ist.

6. Hydrop-Element nach Anspruch 1 oder 2, **dadurch gekennzeichnet, dass** das zweite Mittel (12) angeformt ist.

7. Hydrop-Element nach einem der Ansprüche, **dadurch gekennzeichnet, dass** die im Dämpfungselement (4) angeordnete Düsenbohrung (11) in Richtung Trennkolben (3) als Rohr (13) ausgeführt ist.

8. Hydrop-Element nach einem der vorgenannten Ansprüche, **dadurch gekennzeichnet, dass** der Außendurchmesser des Rohres (13) kleiner als der Innendurchmesser der Hülse (12) ist.

9. Hydrop-Element nach Anspruch 1, **dadurch gekennzeichnet, dass** das Mittel (12) eine Düsennadel ist.

10. Fahrzeug mit Laufwerk und Laufrollen in Fahrtrichtung links und rechts an einem Fahrgestell, sowie einem Laufwerksträger, welcher links und rechts am Fahrgestell zwischen Gehäuse und Laufwerk befestigt ist und jeweils mehrere Laufrollen und Hydrop-Elemente nach einem der Ansprüche 1 bis 9 aufnimmt.

## Claims

1. Hydrop element consisting of a Hydrop spring element with a spring and damping element (20) having at least one hydraulic cylinder (1), a main piston (2), a separating piston (3) and a damping element (4), which is positioned between the main piston (2) and the separating piston (3), **characterized in that** a first means (10) facing towards the damping element (4) is attached to the end face of the main piston (2), with the said first means (10) engaging in an enlarged nozzle bore (11) of the damping element (4) and a second means (12), which engages directly or indirectly in the nozzle bore (11) from the separating piston end, is arranged centrally on the axis on the end face of the separating piston (3).

2. Hydrop element according to Claim 1, **characterized in that** the first means (10) is a nozzle needle.

3. Hydrop element according to Claim 1 or 2, **characterized in that** the first means (10) moves in to the fixed nozzle bore (11) depending on spring travel.

4. Hydrop element according to Claim 1, **characterized in that** in addition to a damping relative to the speed of compression, the said Hydrop element also incorporates a damping-reducing or damping-influencing relative to compression travel function.

5. Hydrop element according to Claim 1, **characterized in that** the second means (12) is a sleeve.

6. Hydrop element according to Claim 1 or 2, **characterized in that** the second means (12) is integrally formed.

7. Hydrop element according to one of the claims, **characterized in that** the nozzle bore (11) arranged in the damping element (4) is formed as a tube (13) in the direction of the separating piston (3).

8. Hydrop element according to one of the aforementioned claims, **characterized in that** the external diameter of the tube (13) is less than the internal diameter of the sleeve (12).

9. Hydrop element according to Claim 1, **characterized in that** the means (12) is a nozzle needle.

10. Vehicle with travelling gear and rollers in the direction of driving left and right on a chassis, and a travelling gear carrier which is attached left and right on the chassis between the housing and travelling gear and which carries several rollers and Hydrop elements according to one of Claims 1 to 9.

## Revendications

1. Elément hydropneumatique, constitué d'un élément à ressort hydropneumatique, comprenant un élément de ressort et d'amortissement (20), présentant au moins un cylindre hydraulique (1), un piston principal (2), un piston de séparation (3) ainsi qu'un élément d'amortissement (4), qui est placé entre le piston principal (2) et le piston de séparation (3), **caractérisé en ce que** l'on monte sur le piston principal (2), du côté frontal, un premier moyen (10) tourné vers l'élément d'amortissement (4), qui vient en prise dans un alésage d'injecteur agrandi (11) de l'élément d'amortissement (4) et du côté frontal, un deuxième moyen (12) est disposé sur le piston de séparation (3) au centre axial, qui vient en prise directement ou indirectement depuis le côté du piston de séparation dans l'alésage d'injecteur (11).

2. Elément hydropneumatique selon la revendication 1, **caractérisé en ce que** le premier moyen (10) est une aiguille d'injecteur.

3. Elément hydropneumatique selon la revendication 1 ou 2, **caractérisé en ce que** le premier moyen (10) entre en fonction de la course du ressort dans l'alésage d'injecteur fixe (11).

4. Elément hydropneumatique selon la revendication 1, **caractérisé en ce qu'**en plus d'un amortissement dépendant de la vitesse de compression du ressort, on intègre une réduction de l'amortissement ou une influence de l'amortissement dépendant de la course de compression du ressort.

5. Elément hydropneumatique selon la revendication 1, **caractérisé en ce que** le deuxième moyen (12) est une douille.

6. Elément hydropneumatique selon la revendication 1 ou 2, **caractérisé en ce que** le deuxième moyen (12) est moulé en place.

7. Elément hydropneumatique selon l'une quelconque des revendications précédentes, **caractérisé en ce que** l'alésage d'injecteur (11) disposé dans l'élément d'amortissement (4) est réalisé sous forme de tube (12) dans la direction du piston de séparation (3).

8. Elément hydropneumatique selon l'une quelconque des revendications précédentes, **caractérisé en ce que** le diamètre extérieur du tube (13) est inférieur au diamètre intérieur de la douille (12).

9. Elément hydropneumatique selon la revendication 1, **caractérisé en ce que** le moyen (12) est une aiguille d'injecteur.

10. Véhicule avec un mécanisme de roulement et des rouleaux de roulement dans la direction de conduite à gauche et à droite sur un bogie, et avec un support de mécanisme de roulement, qui est fixé à gauche et à droite sur le bogie entre le boîtier et le mécanisme de roulement, et qui reçoit à chaque fois plusieurs rouleaux de roulement et éléments hydropneumatiques selon l'une quelconque des revendications 1 à 9.
